# EUROPEAN PATENT SPECIFICATION

(11) **EP 3 358 035 B1**
(45) Date of publication and mention of the grant of the patent: **06.11.2019**
(21) Application number: 16858653.5
(22) Date of filing: 01.06.2016
(51) Int. Cl.: C22C 38/38, C21D 8/02, C21D 6/00, C22C 38/22, C22C 38/24, C22C 38/26, C22C 38/28

(54) **MANUFACTURING METHOD FOR MULTI-ELEMENT ALLOYED, HIGH-STRENGTH, HIGH-WEAR-RESISTANT STEEL AND HOT-ROLLED PLATE**
HERSTELLUNGSVERFAHREN FÜR MEHRTEILIGEN LEGIERTEN, HOCHFESTEN STAHL MIT HOHER VERSCHLEISSFESTIGKEIT UND WARMGEWALZTES PLATTE
PROCÉDÉ DE FABRICATION DE PLAQUE ALLIAGE D'ACIER À PLUSIEURS ÉLÉMENTS, À HAUTE RÉSISTANCE, EXTRÊMEMENT RÉSISTANTE À L'USURE ET LAMINÉE À CHAUD

(30) Priority: 27.10.2015 CN 201510707940
(43) Date of publication of application: 08.08.2018
(73) Proprietor: Tianjin Will Long SCI.&Tech Co., Ltd, Tianjin 300385 (CN)
(72) Inventor: WANG, Junxiang, Tianjin 300385 (CN); GE, Shirong, Tianjin 300385 (CN); YUE, Honglin, Tianjin 300385 (CN)
(74) Representative: Sun, Yiming
(86) International application number: PCT/CN2016/084296
(87) International publication number: WO 2017/071209

(56) References cited:
- EP-B1- 2 402 472
- CA-A1- 2 895 972
- CN-A- 102 644 019
- CN-A- 103 534 372
- CN-A- 104 451 405
- CN-A- 104 694 829
- CN-A- 104 694 829
- CN-A- 105 369 130
- US-A- 4 512 804

## Description

### Field of the Invention

This invention is related to a technical field of high strength and high wear resistant hot-rolled steel. In particular, this invention is related to a manufacturing method of multi-component alloying steel with high strength and high wear resistant and a hot rolled plate thereof.

### Description of Related Art

At present, the widely used wear resistant steel in the coal-mining field is the medium and low alloy wear-resistant steels. The representative steels include the HARDOX series of Sweden (abbreviated as HD series below), EH series of JFE in Japan, NM series of Wuhan Iron and Steel Group Corp. and B-HARD series of Baosteel. The medium and low alloy wear-resistant steel is a type of low-carbon steel with the martensite or martensite-bainite complex microstructure after quenching and tempering. The wear resistance of this kind of wear resistant steel, especially the thick plate, is obviously attenuated from the surface to the heart, which is the main disadvantage of the martensite-bainite wear resistant steel. In addition, it is found that the applied effect of medium and low alloy martensite-bainite wear resistant steel is not ideal under the impact and fatigue working conditions in production practice. Although the medium and low alloy wear resistant steel has relatively good impact toughness, the fatigue stress cracking is easy to occur in this wear resistant steel during long-term service under the impacting wear condition, which will affect the service life. Served in the impact, wear and fatigue complex working conditions, the requirements for the comprehensive performance of the material are very high, including impact resistance, wear resistance, fatigue fracture toughness and fatigue crack sensitivity. At this time, the performance of low alloy wear resistant steel has been unable to meet the complex working conditions of coal mining.

The other widely used wear resistant steel is high manganese steel. Manganese wear-resistant steel has a long history and high safety performance. It has been widely used in all kinds of wear conditions, especially under the condition of impact abrasive wear. The application of manganese wear resistant steel in the mechanical equipment of coal mining is mainly the high manganese steel, which shows the quite special strengthening and wear resistant mechanisms. Under the larger impact load, deformation of materials in the superficial layer induces twin strengthening, dislocation tangles, etc., and the surface hardness and strength are improved rapidly.

CN 104 694 829 A discloses a high-toughness wear-resisting medium manganese steel hot rolled plate and a manufacturing method thereof. The high-toughness wear-resisting medium manganese steel hot rolled plate is prepared from the following chemical components in percentage by mass: 0.8-1.2% of C, less than or equal to 0.8% of Si, 7.0-9.0% of Mn, less than or equal to 0.030% of P, less than or equal to 0.005% of S, 1.5-2.0% of Cr, 0.2-1.0% of Mo, 0.2-1.0% of Mo, 0.2-1.0% of V, less than or equal to 0.2% of Nb, less than or equal to 0.05% of Ti, less than or equal to 0.04% of Al, less than or equal to 0.003 of B and the balance of Fe and inevitable residual impurity elements. The manufacturing method of the hot rolled steel plate comprises the following steps: smelting liquid steel according to set element components, after performing vacuum degassing treatment (external refining) on the liquid steel, performing continuous casting to form a continuous casting blank or die casting and initial rolling to form a steel billet, heating the steel billet at 1250 DEG C and then performing multi-pass rolling with the total reduction rate of not lower than 65% and the pass deformation rate of 10-20% at a final rolling temperature not lower than 1050 DEG C; next, performing solution treatment on the rolled steel plate at a solution temperature not lower than 1050 DEG C, controlling the surface temperature of the steel plate after coming out of water not to be lower than 300 DEG C, and finally obtaining the steel plate, wherein the tensile strength of the obtained steel plate is 700-900MPa, the normal-temperature impact toughness Akv of the steel plate is greater than or equal to 90J, and the hardness of the steel plate after water toughening treatment is less than or equal to 250HBW. The obtained steel plate is suitable for scraper conveyor middle grooves, self-discharging truck compartment plates, ball mill lining plates, feed bin lining plates and the like applicable under the conditions of medium and low loads.

Meanwhile, the wear resistance, impact toughness, and fatigue crack growth rate of the high manganese steel after being strengthened are far superior to those of medium and low-alloy wear-resistant steel strengthened by the martensite or martensite-bainite phase change. However, in practical application, it is found that the impact energy provided in the coal mining process is not enough to fully exert deformation hardening ability of the high manganese steel. The hardening coefficient of high manganese wear resistant steel is low, and the degree of deformation hardening does not reach the ideal value. Therefore, the strengthening effect and wear resistance are not satisfactory in some typical application fields, such as the lining plate of ore crusher, material transport pipeline, bucket teeth of excavator and crawler board of middle trough of scraper conveyor.

When the coal mining machine is running in underground mine, the middle trough of scarper conveyer bears the violent friction of coal, scraper and chain, and is subjected to the effect of friction wear, such as abrasive wear, impacting wear and so on. In addition, the middle trough is also subjected to the action of the operating load of coal mining machine, lateral and longitudinal force of hydraulic support, extrusion and impact forces of large coal and rock blocks stuck in the middle trough. Therefore, the middle trough should have enough strength, stiffness and wear resistance.

### SUMMARY

The aim of the present invention is to solve the problem of poor wear resistance and poor fatigue resistance of wear resistant steel used in the above mechanical equipment under the medium and low impact loads.

The technical scheme adopted by this invention is as follows:
A multi-component alloying steel with high strength and high wear resistant is provided. The weight percentage of chemical composition or the wear resistant steel is as follows: C: 1.0-1.2%, Si: 0.6-1.0%, Mn: 8.0-10.0%, P <0.02%, S <0.02%, Cr: 1.5-2.5%, Mo: 0.2-0.5%, V: 0.6-1.0%, Nb: 0.02-0.06%, Ti: 0.01-0.1%, Al: 0.03-0.08%, and the rest are Fe and unavoidable impurities, and wherein the multi-component alloying steel has a single austenitic structure.

Further, the weight percentage of C is 1.01-1.19%.

Further, the weight percentage of Si is 0.61-0.98%.

Further, the weight percentage of Mn is 8.02-9.99%.

Further, the weight percentage of Cr is 1.55-2.47%. The weight percentage of Nb is 0.02-0.06%.

Further, the weight percentage of Mo is 0.22-0.49%. The weight percentage of Ti is 0.03-0.09%.

Further, the weight percentage of V is 0.61-0.98%. The weight percentage of Al is 0.03-0.07%.

Further, a method for manufacturing hot rolled plates of multi-component_alloying steel with high strength and high wear-resistance, comprising processes of steel making, continuous casting, heating, hot rolling and heat treatment. During the continuous casting process, the casting temperature is 1370-1390°C, and a slab is obtained.

During the heating process, the holding temperature of the slab is 1160-1200°C.

During the hot-rolling process, the rolling temperature of the slab is 1000-1180°C.

During the heat treatment process of the hot rolled plate, the starting temperature of water toughening treatment is 1000-1070°C, and the stopping temperature of the water toughening treatment is 200-300°C.

Further, the tensile strength of the hot rolled plate is more than 900 MPa. The yield strength of the hot rolled plate is more than 480MPa. The impact energy of V-notch impacts test for the hot-rolled plate is as follows: The impact energy (Akv) at 25°C is more than 100 J. The impact energy (Akv) at -40°C is 40-50 J. The Brinell hardness is 220-240 HB.

Further, the wear rate of hot rolled plate is less than 20×10⁻⁶ mm³/N·m under a condition of 200 N load sliding wear.

The steelmaking is proportioning according to the weight percentage as the following components: C: 1.0-1.2%, Si: 0.6-1.0%, Mn: 8.0-10.0%, P <0.02%, S <0.02%, Cr: 1.5-2.5%, Mo: 0.2-0.5%, V: 0.6-1.0%, Nb: 0.02-0.06%, Ti: 0.01-0.1%, Al: 0.03-0.08%, and the rest are Fe and unavoidable impurities.

The advantages and positive effects of the invention are as follows: a hot rolled medium manganese wear-resistant steel with high strength and high wear resistance is obtained by optimizing the composition and content of alloying elements and rationally adjusting the ratio of C and Mn elements. Moreover, the addition of Ti, V, Nb and other micro-alloying elements in steel can refine the crystal grains and form alloy carbides with C element. After solid solution treatment, these carbides disperse in crystal grains and obtain a second phase strengthening effect, which effectively increases the strength, hardness and wear resistance of steel.

### BRIEF DESCRIPTION OF THE DRAWINGS

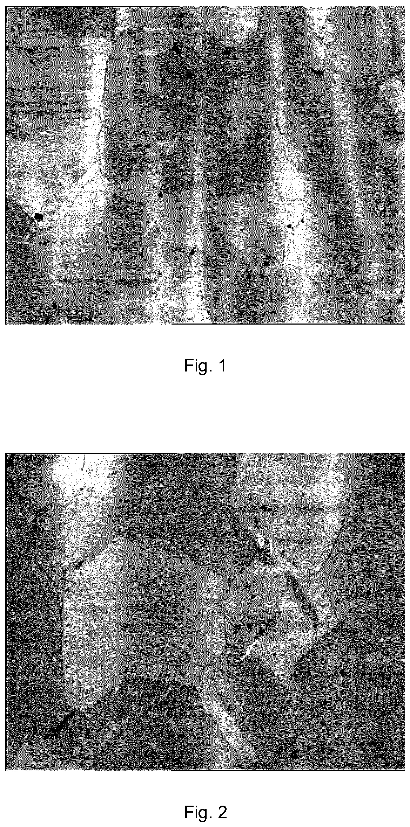

Fig.1 is a photograph showing a metallographic structure of multi-component alloying steel with high strength and high wear resistant (200x).
Fig.2 is a photograph showing a metallographic structure of multi-component alloying steel with high strength and high wear resistant (500x).

### DESCRIPTION OF THE EMBODIMENTS

The idea of the alloy composition design for multi-component alloying steel with high strength and high wear resistant is to expand the austenite region by rationally adjusting the content of C and Mn elements, and the unstable single austenite structure is obtained at normal temperature. Moreover, the addition of a small amount of Cr, Mo, Nb, V and Ti elements can effectively restrain the austenite grain growth and refine the crystal grains. Meanwhile, these micro-alloying elements can form some alloying carbides with C element. These carbides disperse uniformly in solid solution substrate and play the role of second phase strengthening effect, which effectively increases the strength, hardness and wear resistance of steel of the medium manganese steel. When the steel plate is affected by the impact force in actual use, the martensitic transformation strengthening occurred in surface layer to rapidly increase the surface hardness, which further enhance the wear resistance.

In the following descriptions, the reasons for choosing the above chemical compositions and the content ranges will be explained in detail.

Carbon: C element is one of the main added ingredients. The solubility of carbon in austenite is high, which is beneficial to the stability of austenite phase. At the same time, the carbon can form the carbides with the added trace alloying elements. During solution treatment, the dispersed carbide particles in crystal grains form the better solid solution strengthening effect, which increases the hardness, strength and wear resistance of wear resistant steel. But, when the carbon content is more than 1.5%, the carbides in cast microstructure increase. Despite of the water toughening treatment, the retained carbides in austenite are still more. These carbides distribute along the grain boundary to reduce the mechanical properties of steel and improve the austenite stability, which is not conducive to obtaining the microstructure of unstable austenite. In order to reduce the stability of austenite, according to the carbon content of high manganese steel of 1.0-1.4%, the carbon content of the invention is 1.0-1.2%, and the optimum carbon content is 1.01-1.19%.

Manganese: Mn element is one of the main added ingredient, which is favorable for stabilizing austenite and enlarging the austenite phase area. Meanwhile, the element of Mn increases the hardenability of steel and decreases the critical cooling rate of martensite formation. When the content of Mn is increased, the strength and impact toughness of high manganese steel are improved, which is because Mn has the effect of increasing intergranular binding force. But the over-high Mn content will decrease the thermal conductivity of steel and affect the mechanical properties of steel. In order to obtain metastable austenite structure at room temperature, the Mn content of the invention is 8.0-10.0%, preferably 8.02-9.99%, in combination with Fe-Mn-C phase diagram.

Silicon: Si element plays the role of deoxidation and solid solution strengthening in steel and the increase of Si content is beneficial to the strength and hardness of steel. The over-high content of Si will decrease the toughness of steel, and a silicon oxide layer is formed on the surface of steel plate. When the steel plate is heated, the viscosity of the oxide skin is larger, and the phosphorus removal is difficult after the steel plate is removed outside the furnace, which causes the serious red oxide skin on the surface of hot rolled steel, which results in poor surface quality and poor welding properties of the hot rolled steel. The Si content of this invention is 0.6-1.0%, preferably 0.61-0.98%.

Sulfur and phosphorus: S and P elements are unavoidable impurity elements in steel, which are unfavorable to the plasticity and toughness of steel. So the contents of S and P should be as less as possible. In consideration of the actual level of steelmaking, the content of S and P in this invention is less than 0.02%.

Chromium: The solubility of Cr in austenite is very high, which improves the stability of austenite and accelerates the precipitation of carbides in the cooling. The carbides formed by Cr and C elements are dissolved in austenite, which improves the strength, hardness and wear resistance of steel. The Cr content in this invention is 1.5-2.5%, preferably 1.55-2.47%.

Aluminum: Al is a strong deoxidizing element. In order to ensure the lower oxygen content in the steel, the content of Al in the invention is 0.03-0.08%. After deoxidizing, the superfluous Al element can form AIN alloy phases with N element in steel, which increases the strength of steel and refines the austenite grains.

Molybdenum, Titanium, Vanadium, Niobium: Mo, Ti, V and Nb elements have strong binding force with C element, which can replace the Fe atoms in cementite and form the alloy cementite and increase the stability of the cementite. At the same time, these elements can form some new alloy carbides. After solid solution treatment, these alloy carbides disperse in the grains and play the role of the second phase strengthening to increasing the strength, hardness and wear resistance of steel, and refine the grains. But the over-high contents of these elements can lead to a great decrease in plasticity. So, the Mo content in this invention is 0.2-0.5%, preferably 0.22-0.49%. The content of Ti is 0.01-0.1%, preferably 0.03-0.09%. The content of V is 0.6-1.0% preferably 0.61-0.98%. The content of Nb is 0.02-0.06%.

In order to better understand this invention, the contents of this invention are further clarified in combination with some embodiments.
1. Ten different compositions were selected. The specific ratios of each component are shown in Table 1.

**Table 1: Weight percentages of the compositions of examples (%)**

| Example | C | Si | Mn | P | S | Cr | Mo | V | Nb | Ti | Al |
|---|---|---|---|---|---|---|---|---|---|---|---|
| 1 | 1.02 | 0.94 | 9.99 | 0.018 | 0.012 | 1.55 | 0.22 | 0.61 | 0.027 | 0.04 | 0.037 |
| 2 | 1.02 | 0.72 | 8.84 | 0.016 | 0.011 | 2.15 | 0.47 | 0.67 | 0.043 | 0.06 | 0.070 |
| 3 | 1.04 | 0.98 | 9.52 | 0.017 | 0.012 | 1.87 | 0.31 | 0.72 | 0.036 | 0.05 | 0.046 |
| 4 | 1.04 | 0.64 | 9.38 | 0.013 | 0.009 | 2.36 | 0.27 | 0.62 | 0.028 | 0.03 | 0.057 |
| 5 | 1.06 | 0.85 | 9.22 | 0.015 | 0.012 | 2.43 | 0.49 | 0.68 | 0.060 | 0.07 | 0.051 |
| 6 | 1.06 | 0.62 | 9.07 | 0.012 | 0.009 | 2.25 | 0.37 | 0.73 | 0.041 | 0.04 | 0.065 |
| 7 | 1.08 | 0.83 | 8.90 | 0.017 | 0.010 | 2.36 | 0.27 | 0.60 | 0.034 | 0.08 | 0.041 |
| 8 | 1.08 | 0.63 | 8.81 | 0.016 | 0.013 | 1.99 | 0.33 | 0.65 | 0.020 | 0.09 | 0.056 |
| 9 | 1.15 | 0.81 | 8.31 | 0.012 | 0.009 | 1.64 | 0.25 | 0.84 | 0.023 | 0.06 | 0.043 |
| 10 | 1.19 | 0.61 | 8.02 | 0.014 | 0.011 | 2.47 | 0.45 | 0.95 | 0.057 | 0.04 | 0.030 |

The hot rolled plates of the ten examples were sampled and analyzed. After sanding, polishing and corrosion, the microstructure was observed under the metallographic microscope. It was identified as a single austenitic structure. A small amount of granular carbides was dispersed and distributed in the grain boundaries, and the grain size was smaller after hot rolling.
2. The samples of the ten examples were processed by the process flow of melting, continuous casting, heating, hot rolling, and heat treatment. The processing parameters of each sample are shown in Table 2.

**Table 2: Technical parameters of ten groups of examples**

| Example | Continuous casting temperature/°C | Slab reheating temperature /°C | Starting rolling temperature/°C | Finishing rolling temperature/°C | Starting temperature of water toughening/°C | stopping temperature of water toughening/°C |
|---|---|---|---|---|---|---|
| 1 | 1372 | 1162 | 1060 | 1006 | 1000 | 200 |
| 2 | 1375 | 1168 | 1085 | 1014 | 1005 | 242 |
| 3 | 1380 | 1170 | 1094 | 1020 | 1018 | 225 |
| 4 | 1382 | 1174 | 1118 | 1038 | 1020 | 258 |
| 5 | 1385 | 1178 | 1136 | 1046 | 1034 | 270 |
| 6 | 1390 | 1182 | 1150 | 1054 | 1048 | 285 |
| 7 | 1388 | 1184 | 1168 | 1068 | 1052 | 291 |
| 8 | 1384 | 1188 | 1180 | 1078 | 1064 | 300 |
| 9 | 1377 | 1194 | 1174 | 1070 | 1056 | 260 |
| 10 | 1374 | 1198 | 1155 | 1060 | 1048 | 288 |

3. The mechanical properties of the final hot rolled plates of the ten examples are shown in Table 3.

**Table 3: Mechanical properties hot rolled plates of the ten examples**

| Example | Yield strength/MPa | Tensile strength/MPa | Impact energy Akv(J) | | HB |
|---|---|---|---|---|---|
| | | | 25°C | -40°C | |
| 1 | 480 | 900 | 102 | 41 | 220 |
| 2 | 503 | 920 | 123 | 48 | 221 |
| 3 | 497 | 912 | 100 | 40 | 223 |
| 4 | 485 | 915 | 116 | 44 | 225 |
| 5 | 507 | 923 | 109 | 42 | 234 |
| 6 | 521 | 946 | 127 | 50 | 237 |
| 7 | 504 | 916 | 113 | 47 | 223 |
| 8 | 511 | 932 | 114 | 46 | 235 |
| 9 | 503 | 925 | 103 | 41 | 232 |
| 10 | 518 | 942 | 101 | 40 | 240 |

It can be seen from Table 3 that the tensile strengths of the ten samples were more than 900 MPa and the yield strengths were more than 480 MPa. The impact energies of V notches test are as follows: Akv is more than 100 J at 25°C and Akv is 40-50 J at -40°C. The Brinell hardness is 220-240 HB. By comparison, the comprehensive mechanical properties of the example six are the highest.
4. Friction and wear properties

M2000 friction and wear tester was used to study the friction and wear properties. The test conditions are as follows: The size of experimental samples was 10×10×20 mm. The friction pair was GCr15 steel ring having a diameter of 40 mm. The applied load was 200 N and the rotational speed of the steel ring was 200 rpm. The wear test time was 2 h. The wear rate was calculated by the volume wear rate, and the calculation formula is as follows: KV = Δm/ρ·P·L.

Where, KV is the volume wear rate (mm³/N·m), Δm is the weight loss (mg), ρ is the material density (7.89 g/cm³), P is an applied load (N) and L is the wear distance (m).

The results of wear rates for the ten examples are shown in Table 4.

**Table 4: Comparison of wear rates for ten examples with samples of HARDOX450 and Mn13**

| Sample | 1 | 2 | 3 | 4 | 5 | 6 | 7 | 8 | 9 | 10 | HARDOX 450 | Mn 13 |
|---|---|---|---|---|---|---|---|---|---|---|---|---|
| Wear rate (10⁻⁶ mm³/N·m) | 19.91 | 19.83 | 19.74 | 19.65 | 19.46 | 19.23 | 19.41 | 19.52 | 19.59 | 19.40 | 40.21 | 44.83 |

It can be seen from Table 4 that the wear rates of the ten examples are close. The wear resistance is increased to 2.02 times and 2.25 times than the wear resistance of the samples of HARDOX450 and Mn13, respectively.

## Claims

1. A multi-component alloying steel with high strength and high wear-resistance, **characterized in that** the weight percentage of chemical composition is as follows: C: 1.0-1.2%, Si: 0.6-1.0%, Mn: 8.0-10.0%, P <0.02%, S <0.02%, Cr: 1.5-2.5%, Mo: 0.2-0.5%, V: 0.6-1.0%, Nb: 0.02-0.06%, Ti: 0.01-0.1%, Al: 0.03-0.08%, and the rest are Fe and unavoidable impurities, and wherein the multi-component alloying steel has a single austenitic structure.

2. The multi-component alloying steel of claim 1, **characterized in that** the weight percentage of C element is 1.01-1.19%.

3. The multi-component alloying steel of claim 1, **characterized in that** the weight percentage of Si element is 0.61-0.98%.

4. The multi-component alloying steel of claim 1, **characterized in that** the weight percentage of Mn element is 8.02-9.99%.

5. The multi-component alloying steel of claim 1, **characterized in that** the weight percentage of Cr element is 1.55-2.47% and the weight percentage of Nb element is 0.02-0.06%.

6. The multi-component alloying steel of claim 1, **characterized in that** the weight percentage of Mo element is 0.22-0.49% and the weight percentage of Ti element is 0.03-0.09%.

7. The multi-component alloying steel of claim 1, **characterized in that** the weight percentage of V element is 0.61-0.98% and the weight percentage of Al element is 0.03-0.07%.

8. A method for manufacturing a hot rolled plate of multi-component alloying steel with high strength and high wear-resistance of claim 1, comprising processes of steel making, continuous casting, heating, hot rolling and heat treatment, **characterized in that**:
a casting temperature is 1370-1390°C in the continuous casting process to obtain a slab;
a holding temperature of the slab is 1160-1200°C in the heating process;
a rolling temperature of the slab is 1000-1180°C in the hot rolling process;
a starting temperature is 1000-1070°C and a stopping temperature is 200-300°C for water toughening treatment of the hot rolled plate, in the heat treatment process.

9. The method for manufacturing a hot rolled plate of multi-component alloying steel with high strength and high wear-resistance of claim 8, **characterized in that**: the hot rolled plate of the wear-resistant steel has a tensile strength of more than 900 MPa and a yield strength of more than 480 MPa; the hot rolled plate of the wear-resistant steel has an impact energy (Akv) of more than 100 J at 25°C and 40-50 J at -40°C obtained by V-notch impact test; and the hot rolled plate of the wear-resistant steel has a Brinell hardness of 220-240 HB.

10. The method for manufacturing a hot rolled plate of multi-component alloying steel with high strength and high wear-resistance of claim 8, **characterized in that** the wear rate of the hot rolled plate of the wear-resistant steel is ≤ 20×10⁻⁶ mm³/N·m under 200 N load sliding wear condition.

## Patentansprüche

1. Mehrkomponentenlegierungsstahl mit hoher Festigkeit und hoher Verschleißresistenz, **dadurch gekennzeichnet, dass** der Gewichtsprozentsatz der chemischen Zusammensetzung wie folgt ist: C: 1,0-1,2%, Si: 0,6-1,0%, Mn: 8,0-10,0%, P <0,02%, S <0,02%, Cr: 1,5-2,5% Mo: 0,2-0,5%, V: 0,6-1,0%, Nb: 0,02-0,06%, Ti: 0,01-0,1%, AI: 0,03-0,08% und der Rest Fe und unvermeidbare Verunreinigungen sind, und wobei der Mehrkomponentenlegierungsstahl eine einzige austenitische Struktur aufweist.

2. Mehrkomponentenlegierungsstahl nach Anspruch 1, **dadurch gekennzeichnet, dass** der Gewichtsprozentsatz des C-Elements 1,01 bis 1,19% beträgt.

3. Mehrkomponentenlegierungsstahl nach Anspruch 1, **dadurch gekennzeichnet, dass** der Gewichtsprozentsatz des Si-Elements 0,61 bis 0,98% beträgt.

4. Mehrkomponentenlegierungsstahl nach Anspruch 1, **dadurch gekennzeichnet, dass** der Gewichtsprozentsatz des Mn-Elements 8,02-9,99% beträgt.

5. Mehrkomponentenlegierungsstahl nach Anspruch 1, **dadurch gekennzeichnet, dass** der Gewichtsprozentsatz des Cr-Elements 1,55 bis 2,47% beträgt und der Gewichtsprozentsatz des Nb-Elements 0,02 bis 0,06% beträgt.

6. Mehrkomponentenlegierungsstahl nach Anspruch 1, **dadurch gekennzeichnet, dass** der Gewichtsprozentsatz des Mo-Elements 0,22 bis 0,49% beträgt und der Gewichtsprozentsatz des Ti-Elements 0,03-0,09% beträgt.

7. Mehrkomponentenlegierungsstahl nach Anspruch 1, **dadurch gekennzeichnet, dass** der Gewichtsprozentsatz des V-Elements 0,61 bis 0,98% beträgt und der Gewichtsprozentsatz des AI-Elements 0,03 bis 0,07% beträgt.

8. Verfahren zur Herstellung eines warmgewalzten Blechs aus Mehrkomponentenlegierungsstahl mit hoher Festigkeit und hoher Verschleißresistenz nach Anspruch 1, das Verfahren der Stahlherstellung, des Stranggießens, Erhitzens, Warmwalzens und der Wärmebehandlung umfasst, **dadurch gekennzeichnet, dass**:
die Gießtemperatur im Stranggießverfahren 1370-1390 °C beträgt, um eine Platte zu erhalten;
die Haltetemperatur der Platte beim Erhitzen 1160-1200 °C beträgt;
die Walztemperatur der Platte im Warmwalzverfahren 1000-1180 °C beträgt;
die Starttemperatur 1000 bis 1070 °C beträgt und die Stopptemperatur 200 bis 300 °C beträgt für die Wasserhärtungsbehandlung des warmgewalzten Blechs im Wärmebehandlungsverfahren.

9. Verfahren zur Herstellung eines warmgewalzten Blechs aus Mehrkomponentenlegierungsstahl mit hoher Festigkeit und hoher Verschleißresistenz nach Anspruch 8, **dadurch gekennzeichnet, dass**: das warmgewalzte
Blech aus dem verschleißresistenten Stahl eine Zugfestigkeit von mehr als 900 MPa und eine Streckgrenze von mehr als 480 MPa aufweist; das warmgewalzte Blech aus dem verschleißresistenten Stahl eine Schlagenergie (Akv) von mehr als 100 J bei 25 °C und 40-50 J bei -40 °C aufweist, erhalten durch V-Kerbschlagbiegeversuch; und das warmgewalzte Blech des verschleißresistenten Stahls eine Brinellhärte von 220-240 HB aufweist.

10. Verfahren zur Herstellung eines warmgewalzten Blechs aus Mehrkomponentenlegierungsstahl mit hoher Festigkeit und hoher Verschleißresistenz nach Anspruch 8, **dadurch gekennzeichnet, dass** die Verschleißgeschwindigkeit des warmgewalzten Blechs des verschleiß-resistenten Stahls ≤ 20x10⁻⁶ mm³/N·m unter einer Gleitlastverschleißbedingung von 200 N beträgt.

## Revendications

1. Acier allié à multiples composants ayant une haute résistance et une résistance à l'usure élevée, **caractérisé en ce que** le pourcentage en poids de la composition chimique est la suivante : C : 1,0 à 1,2 % ; Si : 0,6 à 1,0 %, Mn : 8,0 à 10,0 %, P < 0,02 %, S < 0,02 %, Cr : 1,5 à 2,5 %, Mo : 0,2 à 0,5 %, V : 0,6 à 1,0 %, Nb : 0,02 à 0,06 %, Ti : 0,01 à 0,1%, Al : 0,03 à 0,08 %, et le reste est du Fe et des impuretés inévitables, et dans lequel l'acier allié à multiples composants a une structure austénitique unique.

2. Acier allié à multiples composants selon la revendication 1, **caractérisé en ce que** le pourcentage en poids de l'élément C est de 1,01 à 1,19 %.

3. Acier allié à multiples composants selon la revendication 1, **caractérisé en ce que** le pourcentage en poids de l'élément Si est de 0,61 à 0,98 %.

4. Acier allié à multiples composants selon la revendication 1, **caractérisé en ce que** le pourcentage en poids de l'élément Mn est de 8,02 à 9,99 %.

5. Acier allié à multiples composants selon la revendication 1, **caractérisé en ce que** le pourcentage en poids de l'élément Cr est de 1,55 à 2,47 % et le pourcentage en poids de l'élément Nb est de 0,02 à 0,06 %.

6. Acier allié à multiples composants selon la revendication 1, **caractérisé en ce que** le pourcentage en poids de l'élément Mo est de 0,22 à 0,49 % et le pourcentage en poids de l'élément Ti est de 0,03 à 0,09 %.

7. Acier allié à multiples composants selon la revendication 1, **caractérisé en ce que** le pourcentage en poids de l'élément V est de 0,61 à 0,98 % et le pourcentage en poids de l'élément Al est de 0,03 à 0,07 %.

8. Procédé de fabrication d'une plaque laminée à chaud d'acier allié à multiples composants ayant une haute résistance et une résistance à l'usure élevée selon la revendication 1, comprenant des processus de préparation de l'acier, de coulage continu, de chauffage, de laminage à chaud et de traitement thermique, **caractérisé en ce que** :une température de coulage est de 1 370 à 1 390 °C dans le processus de coulage continu pour obtenir un lingot ;
une température de conservation du lingot est de 1 160 à 1 200 °C dans le processus de chauffage;
une température de laminage du lingot est de 1 000 à 1 180 °C dans le processus de laminage à chaud ;
une température de démarrage est de 1 000 à 1 070 °C et une température d'arrêt est de 200 à 300 °C pour un traitement de durcissement aqueux de la plaque laminée à chaud, dans le processus de traitement thermique.

9. Procédé de fabrication d'une plaque laminée à chaud d'acier allié à multiples composants ayant une haute résistance et une résistance à l'usure élevée selon la revendication 8, **caractérisé en ce que** : la plaque laminée à chaud de l'acier résistant à l'usure a une résistance à la traction de plus de 900 MPa et une limite d'élasticité de plus de 480 MPa ; la plaque laminée à chaud de l'acier résistant à l'usure a une énergie d'impact (Akv) de plus de 100 J à 25 °C et de 40 à 50 J à -40 °C obtenue par un test d'impact à entaille en V ; et la plaque laminée à chaud de l'acier résistant à l'usure a une dureté Brinell de 220 à 240 HB.

10. Procédé de fabrication d'une plaque laminée à chaud d'acier allié à multiples composants ayant une haute résistance et une résistance à l'usure élevée selon la revendication 8, **caractérisé en ce que** le taux d'usure de la plaque laminée à chaud de l'acier résistant à l'usure est ≤ 20x10⁻⁶ mm³/N.m dans des conditions d'usure par glissement de charge de 200 N.
